# EUROPEAN PATENT APPLICATION

(11) **EP 3 804 596 A1**
(43) Date of publication of application: **14.04.2021**
(21) Application number: 19202550.0
(22) Date of filing: 10.10.2019
(51) Int. Cl.: A47L 5/28, A47L 7/00, A47L 9/00, G11B 33/04

(54) **STORAGE RECEPTACLE FOR STORING A PLURALITY OF DISC-SHAPED GOODS**

(71) Applicant: Valentini, Luca, 20135 Milano (IT)
(72) Inventor: Valentini, Luca, 20135 Milano (IT)
(74) Representative: Wörz, Volker Alfred

(57) **Abstract**

The invention refers to a storage receptacle (2) for storing a plurality of disc-shaped goods. It is suggested that
- the storage receptacle (2) comprises at least two receptacle elements (4) located one next to another, each receptacle element (4) comprising an essentially planar support section (6) and a fastening section (8) fixedly attached to the support section (6),
- neighbouring receptacle elements (4) are releasably attached to one another by means of their fastening sections (6), and
- with the receptacle elements (4) attached to one another, a space between the support sections (6) of two neighbouring receptacle elements (4) defines a storage bay (10) for the disc-shaped goods

## Description

The present invention refers to a storage receptacle for storing a plurality of disc-shaped goods.

Disc-shaped goods may be, for example, CDs, CD-ROMs, DVDs, postcards, or sheet-like abrasive discs (usually made of paper, a fabric or a film of synthetic material) adapted for releasable attachment to a bottom surface of a backing pad of a hand-guided power tool, in particular a sander (purely orbital sander, roto-orbital sander, random orbital sander), or buffing/polishing pads adapted for releasable attachment to a bottom surface of a backing pad of a hand-guided power tool, in particular a polisher (purely rotary polisher, roto-orbital polisher, random orbital polisher). The sheet-like abrasive discs may have a bottom surface provided with abrasive particles and a top surface provided with attachment means for releasable attachment to the bottom surface of a backing pad. The attachment means may be, for example, a first surface of a hook-and-loop fastener (Velcro®). The buffing/ polishing pads also comprise a top surface with similar attachment means for releasable attachment to the bottom surface of a backing pad. The bottom surface of the buffing pads or the buffing pads themselves may comprise or be made of a foam material, wool and/or microfibers.

All these disc-shaped goods need a storage receptacle in order to store them neatly and in a specific order such that a desired one of the disc-shaped goods can be readily found and grasped fast by a user. For example, different types of sheet-like abrasive discs may be arranged in a specific order according to the material they are made of (e.g. paper, a fabric, a film of synthetic material) and/or to the grain size of the abrasive particles. Further, different types of buffing/polishing pads may be arranged in a specific order according to the material they are made of (e.g. foam, wool, microfiber) and/or their cutting capabilities (e.g. coarse, medium, fine, ultrafine) and/or their colour (e.g. blue, green, yellow, white).

In the prior art storage receptacles of the above-identified kind for CDs and CD-ROMs are well known. For example, DE 195 47 254 A1 or CA 2 302 431 A1 describe such storage receptacles.

However, it has proved that the known storage receptacles for disc-shaped goods are not ideal for storing sheet-like abrasive discs and/or buffing/ polishing pads for use with sanders or polishers. In particular, when sanding or polishing large surfaces with a hand-guided power tool, the user has to replace the abrasive discs or the polishing pads from time to time. The storage receptacle must be such that it has a large flexibility in terms of size (number of separate storage bays), attachment to different support surfaces in the surroundings of the user. Further, the storage receptacles for abrasive discs and/or polishing pads must allow an easy and fast grasping of the stored abrasive discs or polishing pads, even if the user wears working gloves.

These objects are solved by a storage receptacle comprising the features of claim 1. In particular, a storage receptacle for storing a plurality of disc-shaped goods is suggested, which is characterized in that
- the storage receptacle comprises at least two receptacle elements located one next to another, each receptacle element comprising an essentially planar support section and a fastening section fixedly attached to the support section,
- neighbouring receptacle elements are releasably attached to one another by means of their fastening sections, and
- with the receptacle elements attached to one another, a space between the support sections of two neighbouring receptacle elements defines a storage bay for the disc-shaped goods.

Attaching a number of receptacle elements to one another for assembling the storage receptacle allows a particularly flexible expansion and reduction of the storage capacity of the storage receptacle. Providing separate sections of the receptacle elements has the advantage that the fastening section can be optimized in terms of attachment capabilities without taking into account the storage capabilities and that the support section can be optimized in terms of storage capabilities without having to take into account the attachment capabilities. The receptacle elements are preferably made of a synthetic material, in particular plastic. The surfaces of the support section facing towards a storage bay may be roughened in order to prevent the disc-shaped goods stored therein from falling out if the storage receptacle is moved around and attached to a different support surface in the surroundings of the user. It is noted that the storage receptacle can be releasably attached to any given support surface, having an even or a curved extension. In case of attachment to a curved surface, the interconnection between the various receptacle elements can act as a swivelling axis (extending essentially obliquely in respect to the longitudinal extension of the storage receptacle) allowing deflection of the storage receptacle at the interconnection between two neighbouring receptacle elements.

Preferably, starting with two receptacle elements, the storage receptacle is modularly extendable by means of further receptacle elements, each further receptacle element being releasably attached to a neighbouring receptacle element by means of its fastening section, thereby defining together with the support section of the neighbouring receptacle element a further storage bay.

The modularity of the storage receptacle is an important aspect of the invention as it allows expansion and reduction of the storage capacity of the storage receptacle according to the user's preferences and/or the desired work to be performed and/or the available space in the surroundings of the user for attaching or stowing away the storage receptacle. Thanks to the modularity, a single storage receptacle comprising a plurality of receptacle elements may be split up into two or more separate storage receptacles if desired, each of the storage receptacles comprising at least two receptacle elements releasably attached to one another. This greatly increases working flexibility for the user of a hand-guided power tool, when storing sheet-like abrasive discs and/or buffing/polishing pads in the storage bays of the storage receptacle.

Preferably, the receptacle elements of the storage receptacle are all designed identically. This allows a particularly easy and fast expansion and reduction of the storage capacity of the storage receptacle. Furthermore, storage receptacles of different sizes and with different storage capacities can be easily and cheaply produced simply by manufacturing the identical receptacle elements which are then releasably attached to one another by means of their fastening sections.

Preferably, the fastening section of each of the receptacle elements has an essentially planar extension. If both sections of the receptacle elements fixedly attached to each another are designed essentially planar, manufacturing of the receptacle elements by means of injection molding is particularly easy, In particular, after the injection and curing/ hardening of plastic material in the injection molds, demolding is achieved in a fast and easy manner. Further, a simple and cheap design of the injection molds can be realized.

According to a preferred embodiment, the fastening section of each of the receptacle elements has one or more hook-like elements along a first edge of the fastening section and one or more slit-like elements along a second edge of the fastening section opposite to the first edge, a hook-like element of a receptacle element adapted to enter into mutual engagement with a respective slit-like element of a neighbouring receptacle element and a slit-like element of the receptacle element adapted to enter into mutual engagement with a respective hook-like element of another neighbouring receptacle element. The slit-like element(s) of a receptacle element are preferably arranged between the fastening section and the support section of the receptacle element.

In particular, it is suggested that each of the receptacle elements has two hook-like elements along the first edge of the fastening section and two slit-like elements along the second edge of the fastening section. The two hook-like elements are spaced apart from each other along the first edge and located near the side edges of the fastening section. Similarly, the two slit-like elements are spaced apart from each other along the second edge and located near the side edges of the fastening section. Obviously, the hook-like elements and the slit-like elements are positioned at corresponding positions of the fastening section of the receptacle elements in order to allow releasable attachment of neighbouring receptacle elements.

It is further preferred that the hook-like element(s) of a receptacle element when in engagement with the respective slit-like element(s) of a neighbouring receptacle element form a tongue-and-groove engagement preventing the neighbouring receptacle elements attached to one another from disengaging when subjected to forces in opposite directions away from each other, the forces directed essentially parallel to the planar extension of the fastening sections. The slit-like element(s) of a receptacle element may comprise an edge section facing towards the neighbouring receptacle element which it is attached to. The hook-like element(s) of a receptacle element engage behind the edge section of the respective slit-like element(s) of a neighbouring receptacle element preventing the hook-like element(s) from unintentionally slipping off the edge section and falling out of the slit-like element(s). This embodiment has the advantage that the receptacle elements will remain attached to one another even if the storage receptacle is moved around and attached to a different support surface in the surroundings of the user. In order to detach the releasably attached neighbouring receptacle elements from each other, first the engagement of the hook-like element(s) of a receptacle element behind the edge section of the slit-like element(s) of a neighbouring receptacle element has to be overcome before the hook-like element(s) can be removed from the slit-like element(s).

According to another preferred embodiment of the present invention it is suggested that the fastening section of each of the receptacle elements has one or more linear guiding elements, that neighbouring receptacle elements are indirectly attached to one another by means of a linear guiding rail to which the receptacle elements are attached by means of their one or more guiding elements. The guiding rail preferably has a linear, straight extension. The receptacle elements may have two opposing guiding elements facing each other and between which the guiding rail may be inserted. The guiding elements may have an L-form emerging from the bottom surface of the fastening section of each of the receptacle elements, with the horizontal underscore lines of the "L" facing each other and forming a guide for receiving the guiding rail.

It is suggested that the receptacle elements can be individually positioned on the guiding rail along a linear extension of the guiding rail, thereby adjusting the available space in each of the storage bays between the support sections of two neighbouring receptacle elements. The receptacle elements may be held in their respective positions on the guiding rail by means of friction or an interlocking mechanism between the receptacle elements and the guiding rail. To this end, the receptacle elements and the guiding rail may be provided with respective interlocking elements, in particular protrusions and recesses.

Further, it is suggested that the guiding rail is provided with a plurality of permanent magnets for releasable attachment of the storage receptacle to magnetic or ferromagnetic surfaces. This has the advantage that the storage receptacle can be easily grasped in its entirety by a user, detached and separated from a first support surface and attached to another support surface in the surroundings of the user, provided that the support surfaces have magnetic and/or ferromagnetic characteristics. Of course, the support surfaces may have a horizontal, a vertical or any inclined extension. The support surfaces may be machine housings or any type of tube or panel made of metal, or the inside of any storage compartment or the like.

According to another preferred embodiment of the invention it is suggested that the support section of a receptacle element extends at an angle in respect to the fastening section of the receptacle element, the angle being in the range of > 0° and < 90°, preferably in the range of 30° and 60°, particularly preferable in the range of 40° to 50°, even more preferable the angle being around 45°. This has the advantage that the overall height of the storage receptacle (from the bottom of the fastening section to the distal end of the support section facing away from the fastening section) is smaller than the depth of the storage bay(s). Hence, the disc-shaped goods are stored in the storage bay(s) extending obliquely in respect to the extension of the fastening section(s) of the respective receptacle elements forming the storage bay(s). The storage receptacle can be arranged even in spaces where the available height is smaller than the diameter of the disc-shaped goods. Nonetheless, the disc-shaped goods can be easily grasped and extracted fast from the storage bay(s) by a user. In particular, the height necessary for arranging the storage receptacle in an available space can be reduced by a factor sin(a), where α is the angle between the fastening section and the support section of a receptacle element. Hence, with an angle of 45° the factor would be 0,707, corresponding to a reduction of the height by almost 30%. With abrasive discs having a diameter of e.g. 150 mm and an angle of 45°, the overall height of the storage receptacle can be reduced to 106,1 mm, obviously plus the thickness of the fastening section (approximately 1-10 mm).

According to yet another preferred embodiment of the invention it is suggested that the support section of at least one of the receptacle elements, preferably of all receptacle elements forming the storage receptacle, is provided with a recess along an edge facing away from the fastening section of the respective receptacle element. The recess is preferably large enough to receive a thumb and an index finger of the user in his/her attempt to grasp a disc-shaped good from the storage bay, even if the user wears working gloves. This embodiment significantly enhances ease of grasping the disc-shaped goods and extracting them from the storage bay(s). Furthermore, the recess allows an unobstructed view onto the disc-shaped goods stored in the storage bay(s) allowing the user to easily select the desired good to grasp and extract from the storage bay. In this respect it is particularly advantageous if the sheet-like abrasive discs have different colours depending on the grain size and/or if the buffing/ polishing pads have different colours depending on their cutting capabilities.

According to yet another preferred embodiment of the present invention it is suggested that the fastening sections of at least some of the receptacle elements forming the storage receptacle are each provided with at least one permanent magnet for releasable attachment of the storage receptacle to magnetic or ferromagnetic surfaces. This has the advantage that the storage receptacle can be easily grasped in its entirety by a user, detached and separated from a first support surface and attached to another support surface in the surroundings of the user, provided that the support surfaces have magnetic and/or ferromagnetic characteristics. Of course, the support surfaces may have a horizontal, a vertical or any inclined extension. The support surfaces may be machine housings or any type of tube or panel made of metal, or the inside of any storage compartment or the like.

Due to the reliable attachment among the receptacle elements, it would be sufficient if only some of the receptacle elements are provided with permanent magnets. However, preferably the fastening sections of all receptacle elements forming the storage receptacle are each provided with at least one, preferably two, permanent magnets. This has the advantage that the storage receptacle can be composed of any of the receptacle elements without having to pay attention to whether a receptacle element has one or more permanent magnets or not.

The invention also refers to a vacuum cleaning device comprising a housing in which are located:
- a dust collecting chamber,
- a motor driving an air blower for drawing air from the dust collecting chamber to the environment through an air outlet of the vacuum cleaning device, thereby creating a depression in the dust collecting chamber, and
- a filter element located between the dust collecting chamber and the blower.
It is suggested that the vacuum cleaning device has at least one storage compartment assigned thereto, in which at least one storage receptacle for storing a plurality of disc-shaped goods according to the present invention is located.

The vacuum cleaning device may be attached to a hand-guided power tool, in particular a sander or polisher, by means of a suction tube. The vacuum cleaning device aspires dust-laden air from the working surface of the power tool. The use of the storage receptacle according to the present invention is particularly advantageous in connection with a vacuum cleaning device because it can be used for storing sheet-like abrasive discs and/or buffing/ polishing pads in the storage bay(s) defined by the support sections of neighbouring receptacle elements. The storage compartment is preferably made of plastic material, e.g. by means of injection molding.

The vacuum cleaning device is preferably a mobile vacuum cleaner provided with wheels or located on a trolley with wheels so the vacuum cleaner can be easily moved to its working site. The storage receptacle may be located at any desired position of the vacuum cleaning device, in particular attached to a handle or to tubes of a support structure or a trolley of the vacuum cleaning device. Preferably, the at least one storage compartment is formed by part of the housing of the vacuum cleaning device.

According to a preferred embodiment, the at least one storage compartment is formed by a top part of the housing and is pivotable about an essentially horizontal axis between a closed position, in which the at least one storage compartment is positioned above the rest of the housing and an external form and surface of the at least one storage compartment smoothly transiting into the external form and surface of the rest of the housing, and an opened position, in which the at least one storage compartment is positioned beside the rest of the housing with an access opening of each of the at least one storage compartments facing upwards and allowing access to the inside of the at least one storage compartment where the at least one storage receptacle is located.

Preferably, the at least one storage compartment is provided with a lid for closing the access opening of the at least one storage compartment and for preventing objects from falling out of the at least one storage compartment when pivoted into its closed position. The lid may be secured in its closed position by an appropriate locking mechanism, e.g. by means of permanent magnets. The lid may be pivoted about a rotational axis between its closed and open position. Permanent magnets or ferromagnetic elements may be provided on one side of the lid opposite to the rotational axis and the storage compartment may be provided with respective permanent magnets or ferromagnetic elements, in order to achieve the desired locking functionality.

Finally, it is suggested that the vacuum cleaning device is provided with an at least partly magnetic or ferromagnetic support surface to which the at least one storage receptacle according to claim 9, 12 or 13 may be releasably attached, the at least partly magnetic or ferromagnetic surface preferably being provided on or in the bottom of the at least one storage compartment. This permits an easy and fast attachment of a storage receptacle in the storage compartment and removal from the storage compartment.

Preferably, separate ferromagnetic elements are located at discrete positions in or on the bottom surface of the storage compartment, the positions corresponding to the positions of permanent magnets provided in or on the fastening sections of the receptacle elements forming the storage receptacle. Alternatively, the bottom of the storage compartment may be provided with one or more ferromagnetic plates or ferromagnetic adhesive foils attached thereto or may be made at least partly from a ferromagnetic material. The ferromagnetic elements or the at least one ferromagnetic plate can be overmolded during injection molding of the storage compartment.

Further characteristics and advantages of the present invention will be described in more detail hereinafter with reference to the accompanying drawings. It is noted that each of the features shown in the drawings and described hereinafter may be present in a storage receptacle according to the invention alone or in any desired combination with other features, even if that combination is not shown in the drawings and/or explicitly mentioned in the description. The drawings show:
- Figure 1: a storage receptacle for disc-shaped goods according to a preferred embodiment of the present invention in a perspective view with eight receptacle elements releasably attached to one another;

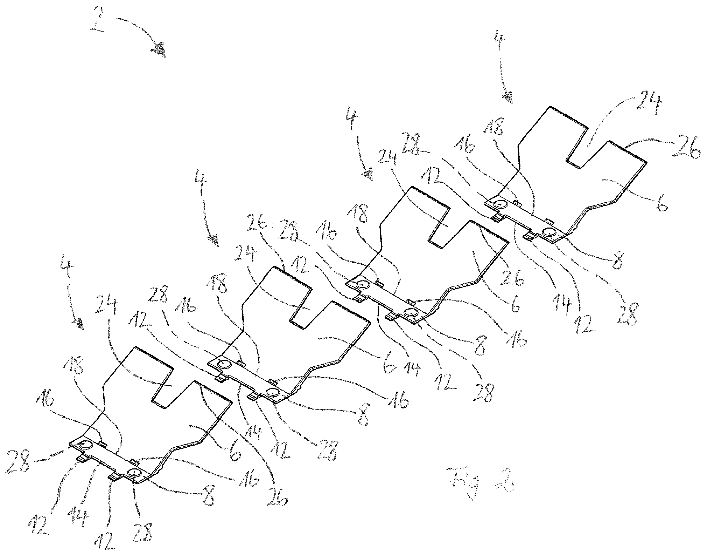

- Figure 2: the storage receptacle according to Fig. 1 with four receptacle elements detached from each other;
- Figure 3: a longitudinal sectional view of the storage receptacle according to Fig. 1 comprising three receptacle elements;
- Figure 4: detail B of Fig. 3;
- Figure 5: a vacuum cleaning device according to a preferred embodiment of the present invention;
- Figure 6: a storage receptacle for disc-shaped goods according to another preferred embodiment of the present invention in a perspective view with receptacle elements releasably attached to one another by means of a guiding rail;
- Figure 7: a bottom view of a storage receptacle according to the present invention; and
- Figure 8: a storage receptacle according to the invention about to be inserted into a storage compartment.

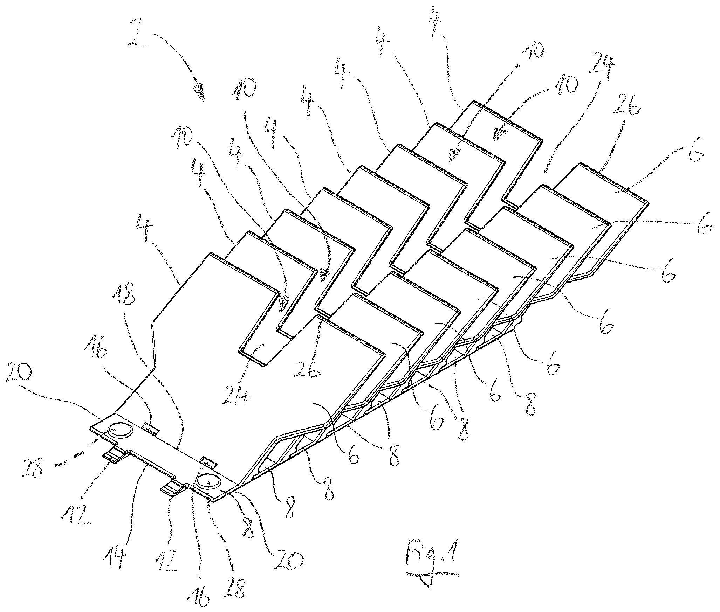

In Fig. 1 a storage receptacle for storing a plurality of disc-shaped goods according to a preferred embodiment of the present invention is shown and indicated in its entirety with reference sign 2.

Disc-shaped goods may be, for example, CDs, CD-ROMs, DVDs, postcards, or the like. The storage receptacle 2 is in particular adapted to store sheet-like abrasive discs adapted for releasable attachment to a bottom surface of a backing pad of a hand-guided power tool, in particular a sander (purely orbital sander, roto-orbital sander, random orbital sander), or buffing/polishing pads adapted for releasable attachment to a bottom surface of a backing pad of a hand-guided power tool, in particular a polisher (purely rotary polisher, roto-orbital polisher, random orbital polisher).

The abrasive discs are usually made of paper, a fabric or a film of synthetic material. They may have a bottom surface provided with abrasive particles of a given grain size and a top surface provided with attachment means for releasable attachment to the bottom surface of a backing pad. The attachment means may be, for example, a first surface of a hook-and-loop fastener (Velcro®). A second surface of the hook-and-loop fastener is then provided on the bottom surface of the backing pad.

The buffing/polishing pads also comprise a top surface with attachment means (e.g. Velcro®) for releasable attachment to the bottom surface of a backing pad. The bottom surface of the buffing/polishing pads or the buffing/polishing pads themselves may comprise or may be made of a foam material, wool and/or microfibers.

All these disc-shaped may be stored neatly and in a specific order in the storage receptacle 2 such that a desired one of the disc-shaped goods can be readily found and grasped fast by a user. For example, different types of sheet-like abrasive discs may be arranged in a specific order according to the material they are made of (e.g. paper, a fabric, a film of synthetic material) and/or to the grain size of the abrasive particles and/or the colour of the abrasive discs. Further, different types of buffing/polishing pads may be arranged in a specific order according to the material they are made of (e.g. foam, wool, microfiber) and/or their cutting capabilities (e.g. coarse, medium, fine, ultrafine) and/or their colour (e.g. blue, green, yellow, white).

The storage receptacle 2 according to the invention is characterized in that
- the storage receptacle 2 comprises at least two receptacle elements 4 located one next to another, each receptacle element 4 comprising an essentially planar support section 6 and a fastening section 8 fixedly attached to the support section 6,
- neighbouring receptacle elements 4 are releasably attached to one another by means of their fastening sections 8, and
- with the receptacle elements 4 attached to one another, a space between the support sections 6 of two neighbouring receptacle elements 4 defines a storage bay 10 for receiving the disc-shaped goods.

Attaching a number of receptacle elements 4 to one another for assembling the storage receptacle 2 allows a particularly flexible expansion and reduction of the storage capacity of the storage receptacle 2. The receptacle elements 4 are preferably made of a synthetic material, in particular plastic, by means of injection molding. The surfaces of the support section 6 facing towards a storage bay 10 may be roughened in order to prevent the disc-shaped goods stored therein from falling out if the storage receptacle 2 is moved around and attached to a different support surface in the surroundings of the user.

Starting with two receptacle elements 4, the storage receptacle 2 is modularly extendable by means of further receptacle elements 4, each further receptacle element 4 being releasably attached to a neighbouring receptacle element 4 by means of its fastening section 8, the support section 6 of each further receptacle element 4 defining together with the support section 6 of a neighbouring receptacle element 4 a further storage bay 10.

The modularity of the storage receptacle 2 is an important aspect of the invention as it allows expansion and reduction of the storage capacity of the storage receptacle 2 according to the user's preferences and/or the desired work to be performed and/or the available space in the surroundings of the user for attaching or stowing away the storage receptacle 2. Thanks to the modularity, a single storage receptacle 2 comprising a plurality of receptacle elements 4 may be split up into two or more separate storage receptacles 2 if desired, each of the storage receptacles 2 comprising at least two receptacle elements 4 releasably attached to one another. This greatly increases working flexibility for the user of a hand-guided power tool, when storing sheet-like abrasive discs and/or buffing/polishing pads in the storage bays 10 of the storage receptacle 2.

Preferably, the receptacle elements 4 of the storage receptacle 2 are all designed identically. This allows a particularly easy and fast expansion and reduction of the storage capacity of the storage receptacle 2. Furthermore, storage receptacles 2 of different sizes and with different storage capacities can be easily and cheaply produced simply by manufacturing the identical receptacle elements 4 which are then releasably attached to one another by means of their fastening sections 8 thereby providing for additional storage bays 10.

Preferably, the fastening section 8 of each of the receptacle elements 4 has an essentially planar extension. If both sections 6, 8 of the receptacle elements 4 fixedly attached to each another are designed essentially planar, manufacturing of the receptacle elements 4 by means of injection molding is particularly easy, In particular, after the injection and curing/ hardening of plastic material in the injection molds, demolding can be achieved in a fast and easy manner. Further, a simple and cheap design of the injection molds can be realized.

Preferably, the fastening section 8 of each of the receptacle elements 4 has one or more hook-like elements 12 along a first edge 14 of the fastening section 8 and one or more slit-like elements 16 along a second edge 18 of the fastening section 8 opposite to the first edge 14. A hook-like element 12 of a receptacle element 4 is adapted to enter into mutual engagement with a respective slit-like element 16 of a neighbouring receptacle element 4 and a slit-like element 16 of the receptacle element 4 is adapted to enter into mutual engagement with a respective hook-like element 12 of another neighbouring receptacle element 4. The slit-like element(s) 16 of a receptacle element 4 are preferably arranged between the fastening section 8 and the support section 6 of the receptacle element 4.

In the embodiment shown in the figures, each of the receptacle elements 4 has two hook-like elements 12 along the first edge 14 of the fastening section 8 and two slit-like elements 16 along the second edge 18 of the fastening section 8. The two hook-like elements 12 are spaced apart from each other along the first edge 14 and may be located near the side edges 20 (see Fig. 1) of the fastening section 8. Similarly, the two slit-like elements 16 are spaced apart from each other along the second edge 18 and may be located near the side edges 20 of the fastening section 8. Obviously, the hook-like elements 12 and the slit-like elements 16 are positioned at corresponding positions of the fastening section 8 of the receptacle elements 4 in order to allow mutual engagement and releasable attachment of neighbouring receptacle elements 4.

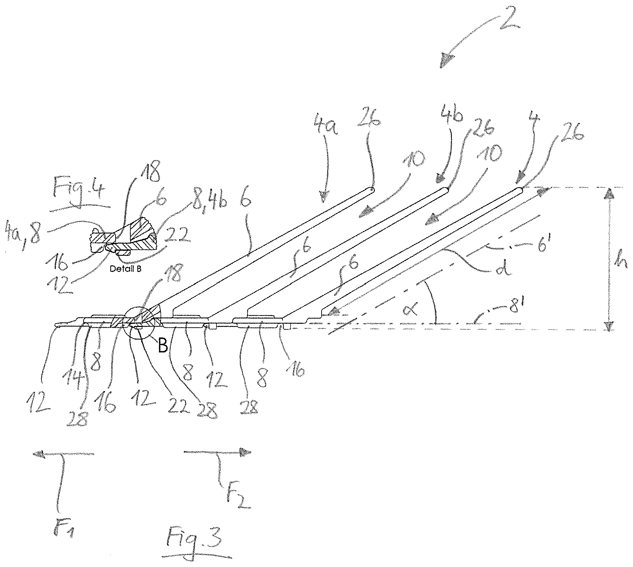

Preferably, the hook-like element(s) 12 of a receptacle element 4 when in engagement with the respective slit-like element(s) 16 of a neighbouring receptacle element 4 form a tongue-and-groove engagement preventing the neighbouring receptacle elements 4 attached to one another from disengaging when subjected to forces F1, F2 (see Fig. 3) in opposite directions away from each other, the forces F1, F2 directed essentially parallel to the planar extension of the fastening sections 8. The slit-like element(s) 16 of a receptacle element 4a may comprise an edge section 22 (see Figs. 3 and 4) facing towards the neighbouring receptacle element 4b which it is attached to. The hook-like element(s) 12 of a receptacle element 4b engage behind the edge section 22 of the respective slit-like element(s) 16 of a neighbouring receptacle element 4a preventing the hook-like element(s) 12 from unintentionally slipping off the edge section 22 and falling out of the slit-like element(s) 16. The hook-like element(s) 12 act similar to a barbed hook. This has the advantage that the receptacle elements 4 will remain attached to one another even if the storage receptacle 2 is moved around and attached to a different support surface in the surroundings of the user. In order to detach the releasably attached neighbouring receptacle elements 4 from each other, first the engagement of the hook-like element(s) 12 of a receptacle element 4b behind the edge section 22 of the slit-like element(s) 16 of a neighbouring receptacle element 4a has to be overcome before the hook-like element(s) 12 can be removed from the slit-like element(s) 16.

It is further suggested that the support section 6 of a receptacle element 4 extends at an angle α in respect to the fastening section 8 of the receptacle element 4, the angle being in the range of > 0° and < 90°, preferably in the range of 30° and 60°, particularly preferable in the range of 40° to 50°, even more preferable the angle α being around 45°. This has the advantage that the overall height h of the storage receptacle 2 (from the bottom of the fastening section 8 to the distal end of the support section 6 facing away from the fastening section 8) is smaller than the depth d of the storage bay(s) 10 (see Fig. 3). Hence, the disc-shaped goods are stored in the storage bay(s) 10 extending obliquely in respect to the extension of the fastening section(s) 8 of the respective receptacle elements 4 forming the storage bay(s) 10. The storage receptacle 2 can be arranged even in spaces where the available height is smaller than the diameter of the disc-shaped goods. Nonetheless, the disc-shaped goods can be easily grasped and extracted fast from the storage bay(s) 10 by a user. In particular, the height h necessary for arranging the storage receptacle 2 in an available space (e.g. a storage compartment) can be reduced by a factor f = sin(a), where α is the angle between the extension 8' of the fastening section 8 and the extension 6' of the support section 6 of a receptacle element 4. In the shown embodiment, the angle α is approximately 30°. Hence, the factor f is about 0,5, corresponding to a reduction of the height by 50%. With abrasive discs having a diameter of e.g. 150 mm and an angle of 30°, the overall height h of the storage receptacle 2 can be reduced to 75 mm, obviously plus the thickness of the fastening section (approximately 1-10 mm).

It is suggested that the support section 6 of at least one of the receptacle elements 4, preferably of all receptacle elements 4 forming the storage receptacle 2, is provided with a recess 24 along an edge 26 facing away from the fastening section 8 of the respective receptacle element 4. The recess 24 is preferably large enough to receive a thumb and an index finger of the user in his/her attempt to grasp a disc-shaped good from the storage bay 10, even if the user wears working gloves. This significantly enhances ease of grasping the disc-shaped goods and extracting them from the storage bay(s) 10. Furthermore, the recess 24 allows an unobstructed view onto the disc-shaped goods stored in the storage bay(s) 10 allowing the user to easily select the desired good to grasp and extract from the storage bay 10. In this respect it is particularly advantageous if the sheet-like abrasive discs have different colours depending on the grain size and/or if the buffing/ polishing pads have different colours depending on their cutting capabilities.

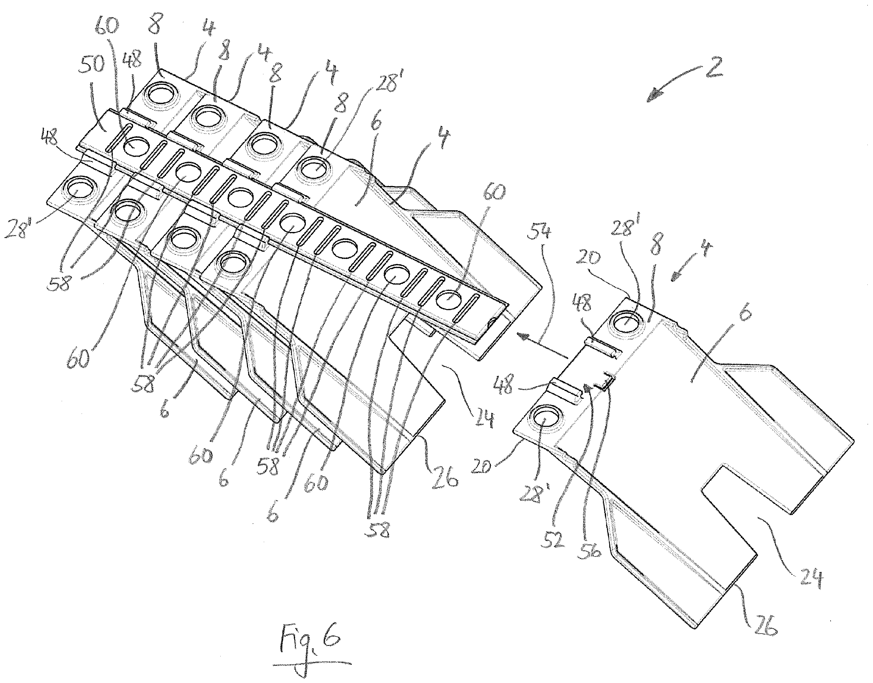

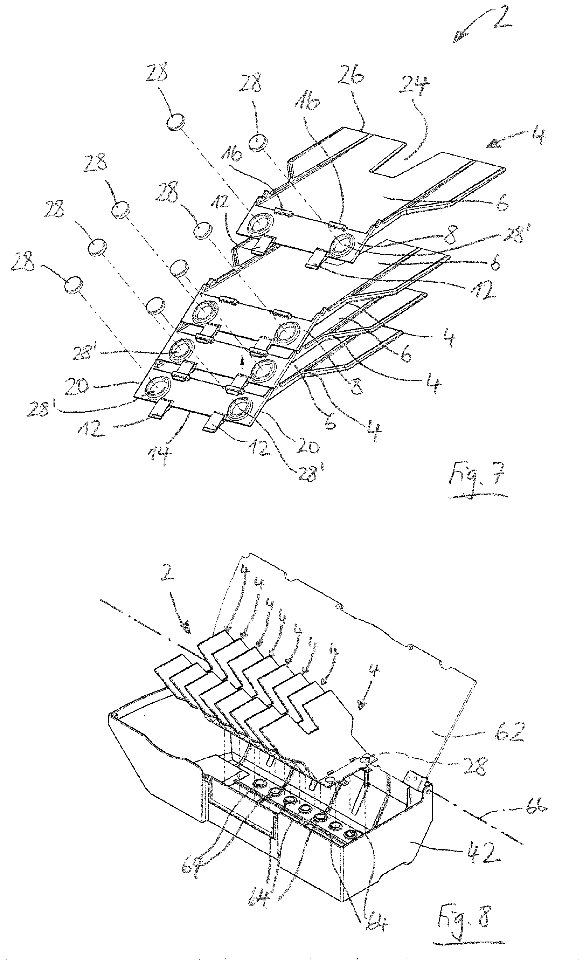

It is further suggested that the fastening sections 8 of at least some, preferably all of the receptacle elements 4 forming the storage receptacle 2 are each provided with at least one, preferably two permanent magnets 28 for releasable attachment of the storage receptacle 2 to a magnetic or ferromagnetic support surface. This has the advantage that the storage receptacle 2 can be easily grasped in its entirety by a user, detached and separated from a first support surface and attached to another support surface in the surroundings of the user, provided that the support surfaces have magnetic and/or ferromagnetic characteristics. Of course, the support surfaces may have a horizontal, a vertical or any inclined extension. The support surface may be a machine housing or any type of tube or panel made of metal, or the inside of any storage compartment or the like. It is suggested that the permanent magnets 28 are overmolded by plastic material during manufacturing of the receptacle elements 4 by means of injection molding. Hence, no additional manufacturing steps are necessary for providing the fastening sections 8 with the permanent magnet(s) 28. Alternatively, respective openings 28' (see Figs. 6 and 7) for the permanent magnets 28 may be provided in the bottom surface of the fastening sections 8 of the receptacle elements 4, into which the permanent magnets 28 can be inserted and fixed, e.g. by means of glue.

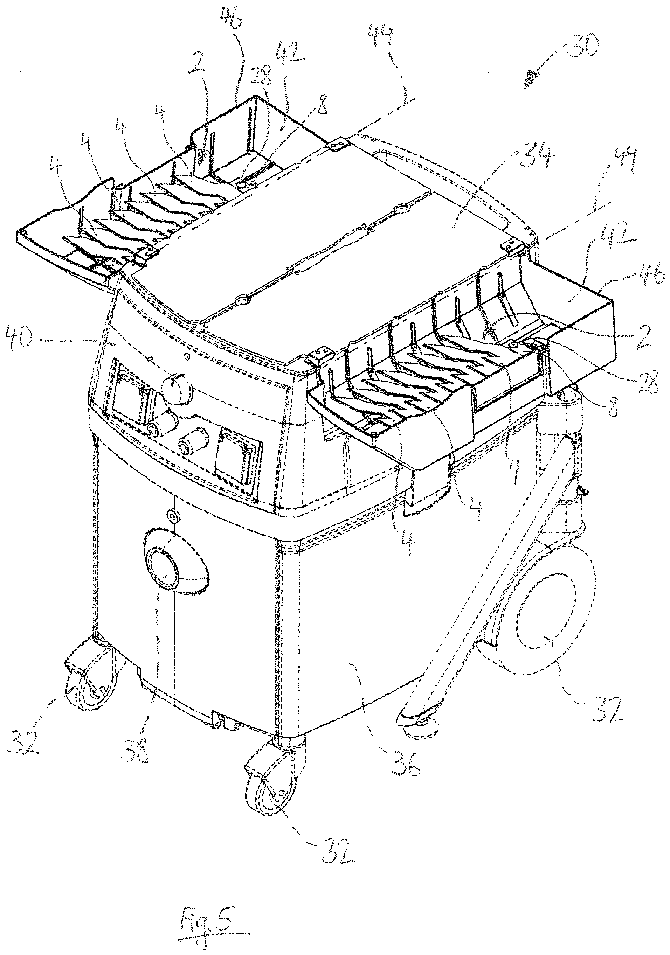

The invention also refers to a vacuum cleaning device like the one shown in Fig. 5 and indicated with reference sign 30 in its entirety. The vacuum cleaning device 30 is embodied as a mobile vacuum cleaner with wheels 32 attached to its housing 34. The following components are located inside the housing 34:
- a dust collecting chamber 36 with an air inlet 38 for aspiring dust-laden air,
- a motor (inside an upper part 40 of the housing 34) driving an air blower (not shown) for drawing air along a path of air path from the dust collecting chamber 36 to the environment through an air outlet (not shown) of the vacuum cleaner 30, thereby creating a depression in the dust collecting chamber 36, and
- a filter element (inside the upper part 40 of the housing 34) located between the dust collecting chamber 36 and the blower in the path of air aspired by the blower.
It is suggested that the vacuum cleaner 30 has at least one storage compartment 42 assigned thereto, in which at least one storage receptacle 2 for storing a plurality of disc-shaped goods according to the invention is located. The storage compartment 42 is preferably made of plastic material, e.g. by means of injection molding.

The vacuum cleaning device may be attached to a hand-guided power tool, in particular a sander or polisher, by means of a suction tube. A first end of the suction tube is attached to the power tool and a second end of the suction tube is attached to the air inlet 38. The vacuum cleaner 30 aspires dust-laden air from the working surface of the power tool. The use of the storage receptacle 2 is particularly advantageous in connection with a vacuum cleaner 30 because it can be used for storing sheet-like abrasive discs and/or buffing/polishing pads in the storage bay(s) 10 defined by the support sections 6 of neighbouring receptacle elements 4.

The storage receptacle(s) 42 may be located at any desired position of the vacuum cleaner 30, in particular attached to a handle or to tubes of a support structure or a trolley of the vacuum cleaner 30. In the shown embodiment, the at least one storage compartment 42 is formed by part of the housing 34 of the vacuum cleaner 30.

In further detail, the at least one storage compartment 42 may be formed by a top part of the housing 34 and is pivotable about an essentially horizontal axis 44 between a closed position, in which the at least one storage compartment 42 is positioned above the rest of the housing 34 and an external form and surface of the at least one storage compartment 42 smoothly transiting into the external form and surface of the rest of the housing 34, and an opened position (see Fig. 5), in which the at least one storage compartment 42 is positioned beside the rest of the housing 34 with an access opening 46 of each of the at least one storage compartments 42 facing upwards and allowing access to the inside of the at least one storage compartment 42 where the at least one storage receptacle 2 is located. In the shown embodiment two storage compartments 42 are provided with the two pivot axes 44 extending in parallel along opposite sides of the housing 34. The storage compartments 42 may be pivoted laterally between their closed and opened positions.

Preferably, the at least one storage compartment 42 is provided with a lid 62 (see Fig. 8) for closing the access opening 46 and for preventing objects and in particular disc-shaped goods from falling out of the at least one storage compartment 42 when pivoted into its closed position on top of the housing 34 with the access opening 46 facing downwards. The lid 62 may be secured in its closed position by an appropriate locking mechanism, e.g. by means of permanent magnets or a snap-in joint. The lid 62 may be pivoted about a rotational axis 66 between its closed and opened position, the rotational axis 66 preferably extending parallel to the pivot axes 44. Permanent magnets or ferromagnetic elements (not shown) may be provided on one side of the lid 62 opposite to the rotational axis 66, and the storage compartment 42 may be provided with respective permanent magnets or ferromagnetic elements, in order to achieve the desired locking functionality.

Finally, it is suggested that the vacuum cleaner 30 is provided with an at least partly magnetic or ferromagnetic support surface to which the at least one storage receptacle 2 comprising permanent magnets 28 in the fastening section 8 of the receptacle elements 4 may be releasably attached. The at least partly magnetic or ferromagnetic surface is preferably provided on or in the bottom of the at least one storage compartment 42. This permits an easy and fast arrangement and attachment of a storage receptacle 2 in the storage compartment 42 and detachment and removal from the storage compartment 42. In the example of Fig. 8 permanent magnets or ferromagnetic elements 64 are provided on the bottom surface of the compartment 42. The permanent magnets 28 interact with the permanent magnets or ferromagnetic elements 64 and hold the storage receptacle 2 in place within the compartment 42 by magnetic force.

Preferably, separate ferromagnetic elements are located at discrete positions in or on the bottom of the storage compartment 42, the positions corresponding to the positions of permanent magnets 28 provided in or on the fastening sections 8 of the receptacle elements 4 forming the storage receptacle 2. Alternatively, the bottom of the storage compartment 42 may be provided with one or more ferromagnetic plates or ferromagnetic adhesive foils attached thereto or may be made at least partly from a ferromagnetic material. The ferromagnetic elements or the at least one ferromagnetic plate can be overmolded during injection molding of the storage compartment 42.

According to another preferred embodiment of the present invention shown in Fig. 6, it is suggested that the fastening section 8 of each of the receptacle elements 4 has one or more linear guiding elements 48. Neighbouring receptacle elements 4 are indirectly attached to one another by means of a linear guiding rail 50, to which the receptacle elements 4 are attached by means of their one or more guiding elements 48. The guiding rail 50 preferably has a linear, straight extension. The receptacle elements 4 may each have two opposing guiding elements 48 facing each other and between which the guiding rail 50 may be inserted. The guiding elements 48 may have an L-form emerging from the bottom surface of the fastening section 8 of each of the receptacle elements 4, with the horizontal underscore lines of the "L" facing each other and forming a guide 52 for receiving the guiding rail 50.

It is suggested that the receptacle elements 4 can be individually positioned on the guiding rail 50 in a direction 54 or opposite thereto along a linear extension of the guiding rail 50. By moving the position of the receptacle elements 4 on the guiding rail 50 the available space in each of the storage bays 10 between the support sections 6 of two neighbouring receptacle elements 4 may be adjusted. The receptacle elements 4 may be held in their respective positions on the guiding rail 50 by means of friction or an interlocking mechanism acting between the receptacle elements 4 and the guiding rail 50. To this end, the receptacle elements 4 and the guiding rail 50 may be provided with respective interlocking elements, in particular protrusions and recesses. In the shown embodiment, the bottom surfaces of the fastening sections 8 of the receptacle elements 4 are each provided with an elastic detent lug 56 and the guiding rail 50 is provided with a plurality of slots 58 for receiving the detent lugs 56, thereby holding the receptacle elements 4 in their respective positions on the guiding rail 50.

Finally, it is suggested that the guiding rail 50 is provided with a plurality of permanent magnets 60 for releasable attachment of the storage receptacle 2 to magnetic or ferromagnetic surfaces. This has the advantage that the storage receptacle 2 can be easily grasped in its entirety by a user, detached and separated from a first support surface and attached to another support surface in the surroundings of the user, provided that the support surfaces have magnetic and/or ferromagnetic characteristics. Of course, the support surfaces may have a horizontal, a vertical or any inclined extension. The support surfaces may be machine housings or any type of tube or panel made of metal, or the inside of any storage compartment, like storage compartment 42 of vacuum cleaner 30, or the like. Additionally, the receptacle elements 4 may be provided with permanent magnets 28 on the bottom surface of their fastening sections 8.

## Claims

1. Storage receptacle (2) for storing a plurality of disc-shaped goods, **characterized in that**
- the storage receptacle (2) comprises at least two receptacle elements (4) located one next to another, each receptacle element (4) comprising an essentially planar support section (6) and a fastening section (8) fixedly attached to the support section (6),
- neighbouring receptacle elements (4) are releasably attached to one another by means of their fastening sections (6), and
- with the receptacle elements (4) attached to one another, a space between the support sections (6) of two neighbouring receptacle elements (4) defines a storage bay (10) for the disc-shaped goods.

2. Storage receptacle (2) according to claim 1, wherein
starting with two receptacle elements (4), the storage receptacle (2) is modularly extendable by means of further receptacle elements (4), each further receptacle element (4) being releasably attached to a neighbouring receptacle element (4) by means of its fastening section (8), the support section (6) of the further receptacle element (4) thereby defining together with the support section (6) of the neighbouring receptacle element (4) a further storage bay (10).

3. Storage receptacle (2) according to claim 1 or 2, wherein,
the receptacle elements (4) of the storage receptacle (2) are all designed identically.

4. Storage receptacle (2) according to one of the preceding claims, wherein,
the fastening section (8) of each of the receptacle elements (4) has an essentially planar extension.

5. Storage receptacle (2) according to one of the preceding claims, wherein
the fastening section (8) of each of the receptacle elements (4) has one or more hook-like elements (12) along a first edge (14) of the fastening section (8) and one or more slit-like elements (16) along a second edge (18) of the fastening section (8) opposite to the first edge (14), a hook-like element (12) of a receptacle element (4) adapted to enter into mutual engagement with a respective slit-like element (16) of a neighbouring receptacle element (4) and a slit-like element (16) of the receptacle element (4) adapted to enter into mutual engagement with a respective hook-like element (12) of another neighbouring receptacle element (4).

6. Storage receptacle (2) according to claim 5, wherein
the hook-like elements (12) of a receptacle element (4) when in engagement with the respective slit-like elements (16) of a neighbouring receptacle element (4) form a tongue-and-groove engagement preventing the neighbouring receptacle elements (4) attached to one another from disengaging when subjected to forces (F1, F2) in opposite directions away from each other, the forces (F1, F2) directed essentially parallel to the planar extension of the fastening sections (8).

7. Storage receptacle (2) according to one of the preceding claims, wherein
the fastening section (8) of each of the receptacle elements (4) has one or more linear guiding elements (48), neighbouring receptacle elements (4) are indirectly attached to one another by means of a linear guiding rail (50) to which the receptacle elements (4) are attached by means of their one or more guiding elements (48).

8. Storage receptacle (2) according to claim 7, wherein
the receptacle elements (4) can be individually positioned on the guiding rail (50) along a linear extension of the guiding rail (50), thereby adjusting the available space in each of the storage bays (10) between the support sections (6) of two neighbouring receptacle elements (4).

9. Storage receptacle (2) according to claim 7 or 8, wherein
the guiding rail (50) is provided with a plurality of permanent magnets (60) for releasable attachment of the storage receptacle (2) to magnetic or ferromagnetic surfaces.

10. Storage receptacle (2) according to one of the preceding claims, wherein
the support section (6) of a receptacle element (4) extends at an angle (α) in respect to the fastening section (8) of the receptacle element (4), the angle (α) being in the range of > 0° and < 90°, preferably in the range of 30° and 60°, particularly preferable in the range of 40° to 50°, even more preferable the angle being around 45°.

11. Storage receptacle (2) according to one of the preceding claims, wherein
the support section (6) of at least one of the receptacle elements (4) is provided with a recess (24) along an edge (26) facing away from the fastening section (8) of the respective receptacle element (4).

12. Storage receptacle (2) according to one of the preceding claims, wherein
the fastening sections (8) of at least some of the receptacle elements (4) forming the storage receptacle (2) are each provided with at least one permanent magnet (28) for releasable attachment of the storage receptacle (2) to magnetic or ferromagnetic surfaces.

13. Storage receptacle (2) according to claim 12, wherein
the fastening sections (8) of all receptacle elements (4) forming the storage receptacle (2) are each provided with at least one, preferably two, permanent magnets (28).

14. Vacuum cleaning device (30) comprising a housing (34) in which are located:
- a dust collecting chamber (36),
- a motor driving an air blower for drawing air from the dust collecting chamber (36) to the environment through an air outlet of the vacuum cleaning device (30), thereby creating a depression in the dust collecting chamber (36), and
- a filter element located between the dust collecting chamber (36) and the blower,
**characterized in that**
the vacuum cleaning device (30) comprises at least one storage compartment (42) in which at least one storage receptacle (2) for storing a plurality of disc-shaped goods according to one of the preceding claims is located.

15. Vacuum cleaning device (30) according to claim 14, wherein
the at least one storage compartment (42) is formed by a top part of the housing (34) of the vacuum cleaning device (30) and is pivotable about an essentially horizontal axis (44) between a closed position, in which the at least one storage compartment (42) is positioned above the rest of the housing (34) and an external form and surface of the at least one storage compartment (42) smoothly transiting into the external form and surface of the rest of the housing (34), and an opened position, in which the at least one storage compartment (42) is positioned beside the rest of the housing (34) with an access opening (46) of each of the at least one storage compartments (42) facing upwards and allowing access to the inside of the at least one storage compartment (42) where the at least one storage receptacle (2) is located.

16. Vacuum cleaning device (30) according to claim 15, wherein
the at least one storage compartment (42) is provided with a lid (62) for closing the access opening (46) and preventing disc-shaped goods from falling out of the at least one storage receptacle (2) and the storage compartment (42) when pivoted into its closed position.

17. Vacuum cleaning device (30) according to one of the claims 14 to 16, wherein
the vacuum cleaning device (30) is provided with an at least partly magnetic or ferromagnetic support surface (64) to which the at least one storage receptacle (2) according to claim 9, 12 or 13 may be releasably attached, the at least partly magnetic or ferromagnetic support surface (64) preferably being provided on or in a bottom surface of the at least one storage compartment (42).
